# EUROPÄISCHE PATENTSCHRIFT

(11) **EP 0 617 298 B1**
(45) Veröffentlichungstag und Bekanntmachung des Hinweises auf die Patenterteilung: **23.06.1999**
(21) Anmeldenummer: 94104806.8
(22) Anmeldetag: 25.03.1994
(51) Int. Cl.: G01V 8/12, A61G 15/16

(54) **Ablagevorrichtung für ärztliche oder zahnärztliche Behandlungsinstrumente mit einer Lichtschranke**
Storage device for medical or dental instruments using a light curtain
Dispositif de réception d'instruments médicaux ou dentaires avec une barrière optique

(30) Priorität: 25.03.1993 DE 4309773
(43) Veröffentlichungstag der Anmeldung: 28.09.1994
(73) Patentinhaber: KALTENBACH & VOIGT GMBH & CO., 88400 Biberach (DE)
(72) Erfinder: Schmid, Gerhard, D-88400 Biberach/Riss (DE); Steinwandel, Peter, D-88400 Biberach/Riss (DE)
(74) Vertreter: Schmidt-Evers, Jürgen, Dipl.-Ing.

(56) Entgegenhaltungen:
- DE-A- 2 823 858
- DE-A- 3 611 408
- US-A- 4 935 621

## Beschreibung

Die Erfindung betrifft eine Ablagevorrichtung nach dem Oberbegriff des Anspruchs 1.

Am Behandlungsplatz eines Arztes oder Zahnarztes sind in der Regel eine Mehrzahl Behandlungsinstrumente vorgesehen, die für unterschiedliche Behandlungsarten bestimmt sind und motorisch angetrieben sein können, wie es bei mit einem Behandlungswerkzeug bestückbaren Handgeräten oder Handstücken der Fall ist.

Bei einer sinnvollen Arbeitsplatzgestaltung werden diese Geräte am Behandlungsort griffbereit und nahe beieinander liegend in Aufnahmevorrichtungen der Ablageeinrichtung angeordnet. Hierbei ist bereits vorgeschla en worden, gleichzeitig mit der manuellen Entnahme eines Behandlungsinstrumentes von seinem Aufnahmeort eine Schaltfunktion am Behandlungsinstrument automatisch durchzuführen. Bei einer solchen Schaltfunktion kann es sich z.B. um das Einschalten einer Arbeitsfunktion des Behandlungsinstruments, z.B. des Antriebsmotors für das Behandlungswerkzeug, oder einer Absaugeinrichtung, handeln. Beim Ablegen des Behandlungsinstrumentes nach der jeweiligen Behandlung wird diese Schaltfunktion in umgekehrter Weise automatisch wieder ausgeschaltet.

Es ist bekannt, für die Durchführung einer Schaltfunktion der Ablagevorrichtung eine Lichtschranke zu benutzen, die die Abnahme und Ablage des Behandlungsinstruments überwacht und die jeweilige Schaltfunktion ausführt oder einleitet. Dies erfolgt durch eine Freigabe oder Unterbrechung der Lichtschranke durch das Gerät bzw. Behandlungsinstrument oder dessen Versorgungsleitung bei der Abnahme von oder Ablage an der zugehörigen Ablagevorrichtung.

Bei einem ärztlichen oder zahnärztlichen Behandlungsplatz oder anderen Behandlungs- oder Arbeitsplätzen tritt Feuchtigkeit z.B. bei der Benutzung von Spül- oder Sprühgeräten auf, wodurch eine Lichtschranke durch Feuchtigkeitsniederschlag auf dem Lichtsender und/oder Lichtempfänger beeinträchtigt werden kann. Außerdem können eine HF (Hochfrequenz)-oder Sonnen- oder Raumlichteinstrahlung Störungen der Lichtschrankenfunktion verursachen.

Zur Vermeidung von aufgrund von Nässe oder Feuchtigkeit auftretenden Beeinträchtigungen der Lichtschranke können Schutzmaßnahmen, wie schützende Gehäuse, vorgesehen werden, jedoch werden hierdurch der Aufwand und die Herstellungs- und Montagekosten für die Lichtschranke erheblich erhöht.

Das vorbeschriebene Problem stellt sich nicht nur bei einer Lichtschranke mit einem einfachen freien Lichtweg, sondern auch bei einer Lichtschranke mit einem doppelten freien Lichtweg, wie es bei einer sog. Reflex-Lichtschranke der Fall ist.

In der DE 28 23 858 C2 ist eine Ablageeinrichtung für zahnärztliche Handgeräte beschrieben, bei der in jede Ablagevorrichtung eine Lichtschranke integriert ist, um das Vorhandensein oder Nichtvorhandensein der Handgeräte zu ermitteln. Hierzu befinden sich im Aufnahmeteil der jeweiligen Ablagevorrichtung einander gegenüberliegend zwei Öffnungen, hinter denen sich jeweils eine Sendediode und eine Empfangsdiode befinden. Die Öffnungen sind so angeordnet, daß sich die Sendediode und die Empfangsdiode einander gegenüberstehen, so daß bei fehlendem Handgerät der freie Lichtweg der Lichtschranke freigegeben ist und bei abgelegtem Handgerät unterbrochen ist.

In der DE-26 31 436 A 1 ist eine solche Lichtschranke bei ihrer Verwendung in der Getränkeindustrie, nämlich zum Abfüllen von Flaschen mit einer Flüssigkeit, beschrieben. Hierbei wird mit Hilfe des Lichtstrahls der Lichtschranke überwacht, ob die Flaschen mit Flaschendeckeln versehen sind oder nicht.

Aus der Druckschrift D2, US-A-4 935 621, ist ein optischer Schalter mit einer Lichtschranke zu entnehmen, der zwei einander gegenüberliegend angeordnete Reflexionsstücke (Fig. 7) oder ein Gabelstück (Fig.8) aus lichtdurchlässigem Material aufweist, die an einander gegenüberliegenden Seiten Reflexionsflächen bildende Schrägflächen haben, die abgedeckt sind. Das Licht wird durch zwei quer zur Lichtschranke verlaufende Lichtleiter zu- und abgeführt, die in einem besonderen Tragteil für die Reflexionsstücke oder das Gabelstück angeordnet sind.

Ein weiterer Nachteil bekannter Lichtschranken besteht darin, daß sowohl beim Vorhanden- oder Nichtvorhandensein von Schutzgehäusen die Anordnung des Lichtsenders und -empfängers eine schwierige und große Bauweise für den zugehörigen Träger bzw. Lichtschrankenkopf vorgeben.

Der Erfindung liegt die Aufgabe zugrunde, eine Lichtschranke so auszugestalten, daß zum einen eine einfache und kleine Bauweise erreichbar ist und zum anderen ihre Störungsanfälligkeit insbesondere bezüglich Nässe bzw. Feuchtigkeit oder Störstrahlung verringert wird.

Diese Aufgabe wird durch die Merkmale des Anspruchs 1 gelöst.

Bei der erfindungsgemäßen Ablagevorrichtung sind der Lichtsender und -empfänger nicht nur jeweils in einem Abstand vom Anfang und Ende des freien Lichtweges angeordnet, so daß sie in einer vor Feuchtigkeit bzw. Nässe oder der Störstrahlung geschützten Position angeordnet werden können, sondern es sind auch einfachere und kleinere Bauweisen möglich, weil der Lichtsender und -empfänger an wahlweisen Positionen des den freien Lichtweg aufweisenden Teiles oder auch eines anderen Teiles angeordnet werden können, wobei der Lichtsender und-empfänger durch geeignete, die Lichtstrahlung ermöglichenden Mitteln mit dem Anfang und Ende des freien Lichtwegs verbindbar sind. Bei diesen Mitteln kann es sich um flexible oder starre Lichtleiter handeln, die in Form einer Röhre, eines Stabes aus durchsichtigem bzw. lichtleitendem Material oder auch eines freien Durchgangs die Lichtstrahlweiterführung gestatten. Dabei ist es möglich, den Lichtsender und -empfänger wahlweise in solchen Positionen und an solchen Stellen des Lichtschrankenträgers oder von diesem entfernt z.B. an der Ablageeinrichtung anzuordnen, daß die eingangs genannten Störungen vermieden werden und aus Gründen der Bauform oder Montage eine vorteilhafte Ausgestaltung erreicht wird.

Dabei ist es vorteilhaft, die Lichtstrahlführung zwischen dem Lichtsender und dem Anfang des freien Lichtwegs oder zwischen dem Ende des freien Lichtwegs und dem Lichtempfänger von einer Geraden abweichen zu lassen, d.h. umzulenken, so daß der Lichtsender und -empfänger nicht in Verlängerung des freien Lichtwegs angeordnet werden muß, sondern an wahlweisen Positionen, insbesondere quer zum freien Lichtweg, angeordnet werden können.

Sofern der Lichtsender und -empfänger an einem separaten Trägerteil angeordnet werden, ist es vorteilhaft, der Lichtführung zwischen dem den Lichtsender und -empfänger tragenden Bauteil und dem Lichtschrankenträger durch eine Klemm-, Schraub- oder Steckvorrichtung wahlweise trennbar auszubilden, wodurch nicht nur eine einfache und schnelle Montage bzw. Demontage sondern auch ein leichter Austausch unterschiedlicher Teile möglich ist.

Eine vorteilhafte Ausgestaltung der Erfindung besteht auch darin, den Lichtschrankenträger vorzugsweise insgesamt aus lichtdurchlässigem Material zu bilden, das sich dazu eignet, zumindest über einen Bereich dieses Teils die Lichtstrahlung durch, das Material zu gestatten. Eine Lichtstrahl-Umlenkung erfolgt dabei durch besondere Umlenkungsvorrichtungen in Form von äußeren schrägen Reflexionsflächen im unfreien Lichtweg im durchsichtigen Material des Lichtschrankenträgers.

In den Unteransprüchen sind Merkmale enthalten, die zur Problemlösung beitragen und außerdem die Lichtführung verbessern und zu besonders kleinen, kostengünstig herstellbaren sowie handhabungsfreundlichen Bauweisen führen.

Nachfolgend werden die Erfindung und weitere durch sie erzielbare Vorteile anhand von bevorzugten Ausführungsbeispielen und einer Zeichnung näher erläutert. Es zeigt
- Fig. 1: eine Ablageeinrichtung mit einer oder mehreren Ablagevorrichtungen insbesondere für ärztliche oder zahnärztliche Behandlungsinstrumente und eine erfindungsgemäße Lichtschranke für jeweils eine Ablagevorrichtung in der Draufsicht;
- Fig. 2 und 3: erfindungsgemäße Lichtschranken in abgewandelten Ausgestaltungen jeweils in der Draufsicht.

Bei der Ablageeinrichtung 1 handelt es sich um einen horizontalen Aufnahmekörper 1a, der an seiner Frontseite 2 eine oder mehrere Ablagevorrichtungen 1b jeweils mit Ablageausnehmungen 3 aufweist, in die von der Frontseite her oder von oben ebenfalls andeutungsweise dargestellte Handstücke 4 ablegbar sind, die mit einer Schulterfläche 4a oder dergleichen auf einer Schulterfläche 4b der Ablageeinrichtung 1 ablegbar sind und für den Gebrauch von der behandelnden Person nach vorne aus den frontseitig offenen Ablageausnehmungen 3 abnehmbar sind. Die Ablageeinrichtung 1 ist in an sich bekannter Weise bezüglich des Behandlungsplatzes horizontal verschiebbar und gegebenenfalls um eine vertikale Schwenkachse schwenkbar an einer Trageinrichtung oder einem Tragarm gehalten (nicht dargestellt).

Die jeder Ablagevorrichtung 1b zugeordnete Lichtschranke 5 sind einander gleich, und deren Hauptteile sind ein gabelförmiges Schrankenbauteil und Lichtschrankenträger 6, ein Lichtsender 7, ein Lichtempfänger 8, ein freier Lichtweg 9, der sich von dem einen Gabelkopf lla zum anderen Gabelkopf llb erstreckt und dessen Anfang mit A und dessen Ende mit E bezeichnet sind, und jeweils ein wenigstens teilweise im Lichtschrankenträgerkörper verlaufender unfreier Lichtweg 12a, 12b, von denen sich der unfreie Lichtweg 12a vom Lichtsender 7 bis zum Anfang A des freien Lichtwegs 9 erstreckt und der andere unfreie Lichtweg 12b sich vom Ende E des freien Lichtwegs 9 bis zum Lichtempfänger 8 erstreckt.

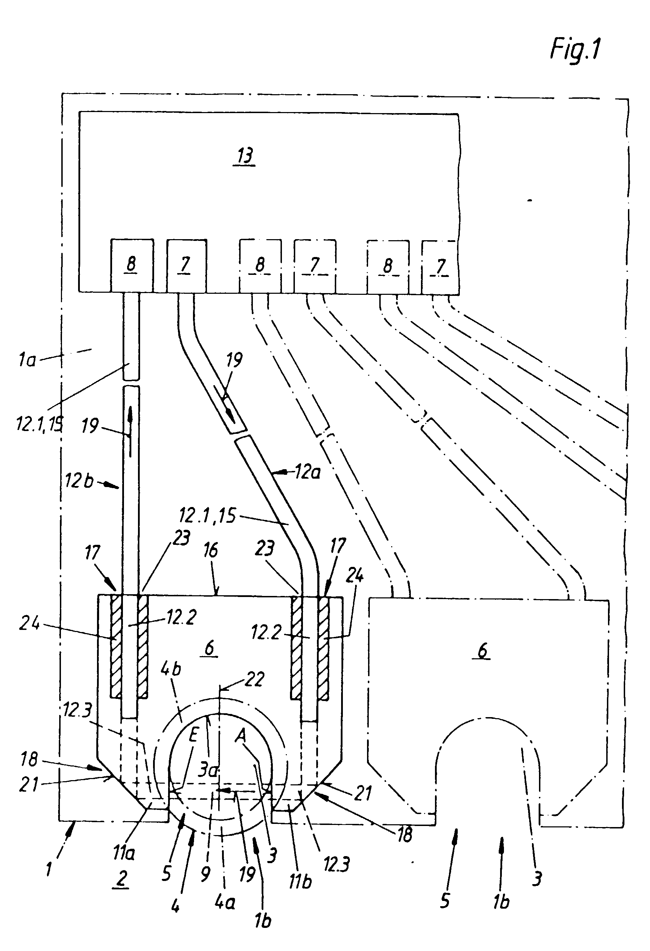

Beim Ausführungsbeispiel nach Fig. 1 sind der Lichtsender 7 und der Lichtempfänger 8 vom Lichtschrankenträger 6 separat angeordnet und von einer Platine 13 getragen, an der - soweit vorhanden - auch die weiteren Lichtsender 7 und Lichtempfänger 8 angeordnet sein können. Bei dem Lichtsender 7 und dem Lichtempfänger 8 kann es sich um eine Leuchtdiode und eine Photozelle bzw. Empfangsdiode handeln, die an einen nicht dargestellten elektrischen Steuerstromkreis zur Steuerung eingangs beschriebener Schaltfunktionen angeschlossen sind. Bei der Platine 13 kann es sich auch um eine Leiterplatte handeln, die Teil der elektrischen Steuereinrichtung ist.

Der Lichtschrankenträger 6 ist ein-flacher bzw. scheibenförmiger Körper mit ebenen Unter- und Oberseiten und einer in der Draufsicht im wesentlichen viereckigen Basisform, wobei an der Frontseite eine frontseitig offene, gegebenenfalls halbrunde Ausnehmung vorgesehen ist, deren Querschnittsgröße an die Ablageausnehmung 3 angepaßt ist und sich mit letzterer deckt. Die Frontseite ist mit 2 bezeichnet.

Der Lichtschrankenträger 6 ist in geeigneter Weise an der Ablageeinrichtung 1 gehalten, z.B. von vorne hinten bzw. von innen in eine Ausnehmung eingeschoben oder von vorne, oben oder unten in eine Halterung eingesetzt oder angelenkt und fixiert (im einzelnen nicht dargestellt).

Die unfreien Lichtwege 12a, 12b bestehen jeweils aus mehreren Abschnitten. Ein erster Abschnitt 12.1 wird jeweils durch einen flexiblen Lichtleiter 15 gebildet, der mit seinem hinteren Ende jeweils lichtleitend mit dem Lichtsender 7 bzw. dem Lichtempfänger 8 verbunden ist und mit seinem vorderen Ende mit dem Lichtschrankenträger 6 verbunden ist, vorzugsweise an dessen Rückseite 16, wobei jeweils von der Verbindungsstelle 17 ein zweiter Abschnitt 12.2 sich insbesondere rechtwinklig zum freien Lichtweg 9 sich weiter nach vorne erstreckt bis zu einer Umlenkstelle 18, an der sich der zweite unfreie Lichtwegabschnitt 12.2 mit der Mittelachse des freien Lichtwegs 9 schneidet. Von der Umlenkstelle 18 erstreckt sich jeweils ein dritter unfreier Lichtwegabschnitt 12.3 koaxial zum freien Lichtweg 9 zu dessen Anfang A bzw. Ende E, wobei die beiden dritten unfreien Lichtwegabschnitte 12.3 aufeinander zu gerichtet sind. An den Umlenkstellen 18 ist eine Umlenkungsvorrichtung für die Lichtstrahlen 19 angeordnet, die eine gebrochene Lichtstrahlführung ist. Bei der vorliegenden Ausgestaltung ist eine prismatische Lichtbrechung um 90° vorgesehen. Hierzu ist an der Umlenkstelle 18 ein Prisma mit einer die Lichtstrahlen brechenden Reflexions - und Prismenfläche 21 vorgesehen. Bei der vorliegenden Ausgestaltung ist die Prismenfläche 21 durch eine bezüglich der von vorne nach hinten verlaufenden vertikalen Mittelebene 22 unter einem Winkel von 45° angeordneten schrägen Seitenfläche des Lichtschrankenträgerkörpers 6 gebildet, wobei letzterer aus durchsichtigem Material, wie Glas oder Kunststoff, besteht, vorzugsweise aus Plexiglas. Aufgrund dieser Ausgestaltung bedarf es im Bereich der unfreien Lichtwegabschnitte 12.2 und 12.3 keiner besonderen Ausgestaltung im Trägerkörper 6, da aufgrund seiner Durchsichtigkeit die Lichtstrahlen sich durch das Vollmaterial erstrecken und am Anfang A des freien Lichtweges 9 an der Innenfläche 3a der Ausnehmung 3 austreten und (bei entferntem Handstück 4) am Ende des unfreien Lichtwegs 9 an der Innenfläche 3a in das Vollmaterial wieder eintreten.

Bei der vorliegenden Ausgestaltung sind zur Verbindung der aus biegsamen Kunststoff oder Glasfasern bestehenden Lichtleiter 15 mit dem Trägerkörper 6 zueinander parallele und mit den Umlenkstellen 18 fluchtende Sacklöcher 23 im Trägerkörper 6 vorgesehen, die an der Rückseite 16 austreten, und in die die im Querschnitt entsprechend groß bemessenen, runden Lichtleiter 15 mit ihren vorderen Endbereichen eingesteckt sind. Im Bereich der Sacklöcher 23 können gegebenenfalls Aufnahmehülsen 24 in den Trägerkörper 6 eingelassen sein, die die Sacklöcher 23 wenigstens teilweise bilden.

Im Betrieb der Lichtschranke 5 sendet der Lichtsender 7 Licht aus, dessen Lichtstrahlen 19 bei einem abgelegten Handstück 4 im Bereich des freien Lichtwegs 9 unterbrochen sind, wobei der kein Licht empfangende Lichtempfänger 8 ein entsprechendes Signal erzeugt, z.B. ein Ausschaltsignal. Bei entferntem Handstück 4 erstrecken sich die Lichtstrahlen 19 bis zum Lichtempfänger 8, der dann ein zweites elektrisches Signal erzeugt, daß zur Einschaltung einer bestimmten Funktion, z.B. zur Einschaltung des Antriebs des Werkzeugs des Handstücks 4 benutzt wird. Auf diese Weise erfolgt die Ein- und Ausschaltung des Antriebs bei der Abnahme und Ablage automatisch, so daß der Arzt diese Funktion nicht ein- und auszuschalten braucht.

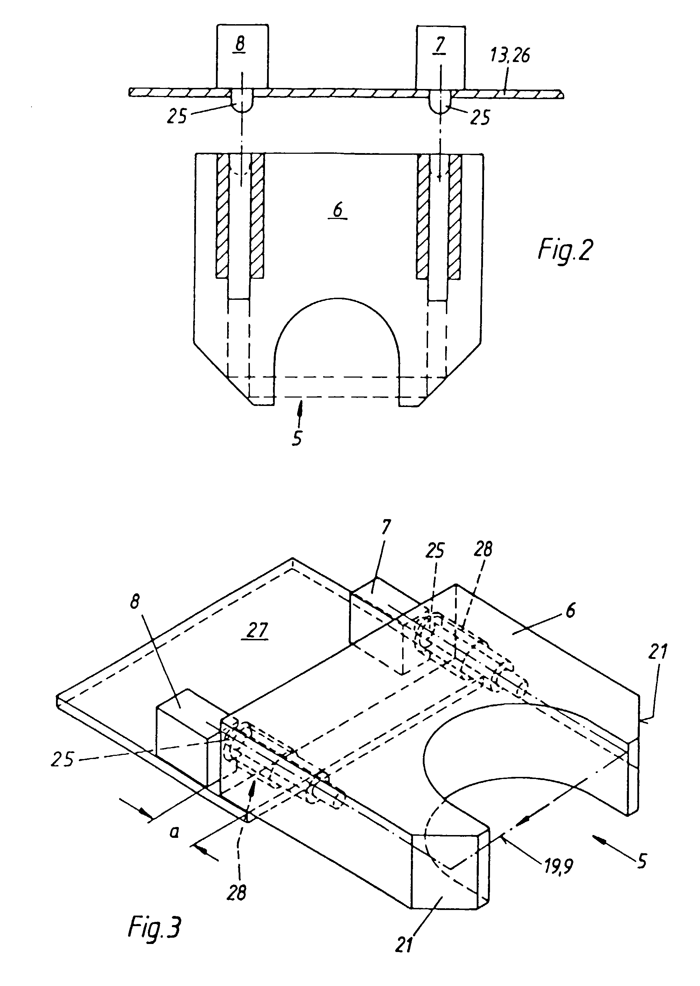

Beim Ausführungsbeispiel nach Fig. 2, bei dem der Lichtschrankenkörper gleich ausgebildet, ist das den Lichtsender 7 und den Lichtempfänger 8 tragende Bauteil, hier die Platine 13 oder Leiterplatte, an den Trägerkörper 6 ansetz- oder ansteckbar, so daß die Lichtleiter 15 entfallen können. Vorzugsweise ist eine Steckverbindung zum Ansetzen vorgesehen. Hierzu können an dem Bauteil Steckzapfen 25 vorgesehen sein, die in die Sacklöcher 23 vorzugsweise mit einer gewissen Klemmspannung einsteckbar sind, und durch die hindurch sich die Lichtstrahlen 19 erstrecken. Es ist möglich und vorteilhaft, den Lichtsender 7 und den Lichtempfänger 8 in die Steckzapfen 25 zu integrieren. Desweiteren ist es möglich, die Steckzapfen 25 durch den Lichtsender 7, z.B. eine Leuchtdiode, und den Lichtempfänger 8 zu bilden. Dabei kann es sich bei der Platine 13 um eine Gehäusewand handeln, an deren Innenseite der Lichtsender 7 und der Lichtempfänger 8 gegebenenfalls mit einer sie tragenden Leiterplatte angeordnet ist bzw. sind und die Steckzapfen 25 bzw. der Lichtsender 7 und der Lichtempfänger 8 die Gehäusewand 26 in dafür vorgesehenen Löchern durchfassen und vorzugsweise überragen.

Bei der Ausgestaltung nach Fig. 2 wird ein Teil des Lichtwegabschnitts 12.2 durch die Sacklöcher 23 gebildet.

Die Ausgestaltung des Ausführungsbeispiels nach Fig. 3, bei dem der Trägerkörper 6 im wesentlichen gleich ausgebildet ist, macht deutlich, daß der Lichtschrankenträgerkörper 6 an dem Lichtsender 7, dem Lichtempfänger 8 und einer sie tragenden Leiterplatte 27 getragen sein kann, wobei er mit dem Lichtsender 7 und dem Lichtempfänger 8 verbunden ist, insbesondere daran angesteckt ist und mit seiner Unterseite auf der Leiterplatte 27 aufliegen kann. Letzteres wird dadurch ermöglicht, daß der Lichtsender 7 und der Lichtempfänger 8 in einem nach hinten gerichteten Abstand a von der Vorderkante der Leiterplatte 27 auf letzterer angeordnet sind und die Lichtwege an den Vorderseiten des Lichtsenders 7 und des Lichtempfängers 8 in der Höhe angeordnet sind, in der sich die Lichtwege im Lichtschrankenträgerkörper 6 befinden.

Im Rahmen der Erfindung sind auch andere lichtleitende Verbindungen zwischen dem Lichtschrankenträgerkörper 6 und den Lichtleitern 15 oder dem Lichtsender 7 sowie Lichtempfänger 8 möglich. Für den Anschluß der Lichtleiter 15 an jeweils einem oder beiden Enden können z.B. an sich bekannte Schraubbuchsen 28 vorgesehen sein, wie sie in Fig. 3 andeutungsweise in einem in den Lichtschrankenträgerkörper 6 eingeschraubten Zustand dargestellt sind.

## Patentansprüche

1. Ablagevorrichtung (1) mit einer Lichtschranke für ärztliche oder zahnärztliche Behandlungsinstrumente (4), mit einem gabelförmigen Lichtschrankenträger (6), zwischen dessen Gabelköpfen (11a,11b) eine freie Schrankenstrecke (9) im Bereich einer Ausnehmung (3) für ein Behandlungsinstrument (4) angeordnet ist, und mit einem Lichtsender (7) und einem Lichtempfänger (8),
**dadurch gekennzeichnet**,
daß das vom Lichtsender (7) abgegebene Licht der Schrankenachse über ein Lichtumlenkelement (21) zugeführt ist, daß dem Lichtempfänger (8) das von der Schrankenachse kommende Licht über ein Lichtumlenkelement (21) zugeführt ist, daß der Lichtsender (7) und der Lichtempfänger (8) jeweils in einem sich bezüglich der freien Schrankenstrecke (9) quer erstreckenden Lichtwegabschnitt (12.1, 12.2) in einem Abstand von der Schrankenachse angeordnet sind, daß der Lichtschrankenträger (6) wenigstens einen Teil der sich quer erstreckenden Lichtwegabschnitte (12.1,12.2) aufweist sowie durch einen quaderförmigen Körper mit einer ebenen Unter- Ober und Rückseite (16) aus lichtdurchlässigem Material gebildet ist und daß die Lichtumlenkelemente (21) jeweils durch eine Lichtbrechungsfläche in Form einer schrägen Außenfläche des Lichtschrankenträgers (6) gebildet sind, die im Kreuzungsbereich der Achsen der freien Schrankenstrecke (9) und des umgelenkten Lichtwegabschnitts (12.1, 12.2) angeordnet sind.

2. Lichtschranke nach Anspruch 1,
dadurch gekennzeichnet,
daß der Lichtsender (7) und der Lichtempfänger (8) entfernt von dem Lichtschrankenträger (6) angeordnet und mit diesem durch flexible Lichtleiter (15) verbunden sind.

3. Lichtschranke nach einem der vorherigen Ansprüche, dadurch gekennzeichnet, daß der Lichtsender (7) und der Lichtempfänger (8) am Lichtschrankenträger (6), an einem separaten Trägerteil oder innenseitig an einer Gehäusewand (26) oder an einer Leiterplatte (27) angeordnet ist bzw. sind.

4. Lichtschranke nach einem der vorherigen Ansprüche,
dadurch gekennzeichnet,
daß der Lichtsender (7) und der Lichtempfänger (8) im Umfangsbereich des Lichtschrankenträgers (6) angeordnet sind.

5. Lichtschranke nach Anspruch 2 oder 3,
dadurch gekennzeichnet,
daß die Lichtleiter (15) durch eine Klemm-Schraub- oder Steckverbindung mit dem Lichtschrankenträger (6) verbunden sind.

6. Lichtschranke nach einem der vorherigen Ansprüche,
dadurch gekennzeichnet,
daß im Lichtschrankenträger (6) zur Aufnahme der Lichtleiter (15) oder des Lichtsenders (7) und Lichtempfängen (8) jeweils ein Loch (23) vorgesehen ist.

7. Lichtschranke nach einem der vorherigen Ansprüche,
dadurch gekennzeichnet,
daß das Umlenkelement eine die Lichtstrahlen (19) um etwa 90° brechende Lichtbrechungsfläche (21) aufweist.

8. Lichtschranke nach einem der vorherigen Ansprüche,
dadurch gekennzeichnet,
daß ein Abschnitt (12.1, 12.2) der im Lichtschrankenträger (6) quer zur Schrankenstrecke verlaufenden Lichtwege durch einen Kanal oder eine Bohrung gebildet sind.

9. Lichtschranke nach einem der vorherigen Ansprüche,
dadurch gekennzeichnet,
daß der Lichtsender (7) und der Lichtempfänger (8) in einer Position, in der sie mit den zugehörigen Lichtwegabschnitten (12.2) fluchten, an der Lichtschrankenträger (6) ansetzbar sind oder umgekehrt.

10. Lichtschranke nach Anspruch 9,
gekennzeichnet durch
eine Klemm-, Schraub- oder Steckverbindung zwischen dem Lichtschrankenträger (6) und dem Lichtsender (7) und dem Lichtempfänger (8).

## Claims

1. Depository device (1) having a light barrier, for medical or dental treatment instruments (4), having a forklike light barrier carrier (6) between the fork heads (11a, 11b) of which there is arranged an exposed barrier path (9) in the region of a recess (3) for a treatment instrument (4), and having a light transmitter (7) and a light receiver (8),
characterised in that,
the light emitted from the light transmitter (7) is delivered to the barrier axis via a light deflection element (21), in that the light coming from the barrier axis is delivered to the light receiver (8) via a light deflection element (21), in that the light transmitter (7) and the light receiver (8) are arranged each at a spacing from the barrier axis in respective optical path sections (12.1, 12.2) extending transversely with respect to the exposed barrier path (9), in that the light barrier carrier (6) has at least a part of the transversely extending optical path sections (12.1, 12.2) and is formed by a block-like body having flat upper, lower and reverse sides, of light permeable material, and in that the light deflection elements (21) are formed by respective light refraction surfaces in the form of an oblique outer surface of the light barrier carrier (6) arranged in the region of intersection the axes of the exposed light barrier path (9) and the deflected optical path section (12.1, 12.2).

2. Light barrier according to claim 1,
characterised in that,
the light transmitter (7) and the light receiver (8) are arranged distanced from the light barrier carrier (6) and are connected therewith via flexible light conductors (15).

3. Light barrier according to any preceding claim,
characterised in that,
the light transmitter (7) and the light receiver (8) is or are arranged on the light barrier carrier (6), on a separate carrier part or inwardly on a housing wall (26) or on a circuit board (27).

4. Light barrier according to any preceding claim,
characterised in that,
the light transmitter (7) and the light receiver (8) are arranged in the peripheral region of the light barrier carrier (6)

5. Light barrier according to claim 2 or 3,
characterised in that,
the light conductors (15) are connected with the light barrier carrier (6) via a clamping, a screw or a plug-in connection.

6. Light barrier according to any preceding claim,
characterised in that,
there are provided in the light barrier carrier (6) respective holes for receiving the light conductors (15) or the light transmitter (7) and the light receiver (8).

7. Light barrier according to any preceding claim,
characterised in that,
the deflection element has a light refraction surface (21) which refracts the light rays (19) by about 90°.

8. Light barrier according to any preceding claim,
characterised in that,
a section (12.1, 12.2) of the optical path extending in the light barrier carrier (6) transversely to the barrier path is formed by a channel or a bore.

9. Light barrier according to any preceding claim,
characterised in that,
the light transmitter (7) and the light receiver (8) can be put in place on the light barrier carrier (6) in a position in which they align with the associated optical path sections (12.2), or vice versa.

10. Light barrier according to claim 9,
characterised by
a clamping, a screw or a plug-in connection between the light barrier carrier (6) and the light transmitter (7) and the light receiver (8).

## Revendications

1. Dispositif de réception (1) comportant une barrière photoélectrique pour des instruments de traitement (4) médicaux ou dentaires, comprenant un support de barrière photoélectrique (6) fourchu dont les extrémités de fourche (11a, 11b) définissent un intervalle de barrière (9) libre qui est disposé dans la région d'un évidement (3) pour un intsrument de traitement (4), ainsi qu'un émetteur de lumière (7) et un récepteur de lumière (8), caractérisé par le fait que la lumière délivrée par l'émetteur de lumière (7) est amenée sur l'axe de la barrière photoélectrique par l'intermédiaire d'un élément de déviation de lumière (21), par le fait que l'émetteur de lumière (7) et le récepteur de lumière (8) sont disposés chacun à distance de l'axe de la barrière photoélectrique, sur un tronçon de trajet optique (12.1, 12.2) qui s'étend transversalement à l'intervalle de barrière (9) libre, par le fait que le support de barrière photoélectrique (6) contient au moins une partie des tronçons de trajets optique (12.1, 12.2) transversaux et est formé d'un corps parallélépipédique avec des faces inférieure, supérieure et postérieure (16) en un matériau transparent et par le fait que les éléments de déviation de la lumière (21) sont formés chaque fois d'une surface de réfraction de la lumière sous la forme d'une surface extérieure inclinée du support de barrière photoélectrique (6) qui est disposée dans la région de l'intersection des axes de l'intervalle de barrière (9) libre et du tronçon de trajet optique (12.1, 12.2) dévié.

2. Barrière photoélectrique selon la revendication 1, caractérisée par le fait que l'émetteur de lumière (7) et le récepteur de lumière (8) sont disposés à distance du support de barrière photoélectrique (6) et sont reliés à celui-ci par l'intermédiaire de guides optiques (15) flexibles.

3. Barrière photoélectrique selon une des revendications précédentes, caractérisée par le fait que l'émetteur de lumière (7) et le récepteur de lumière (8) sont disposés sur le support de barrière photoélectrique (6), sur un élément de support séparé ou à l'intérieur sur une paroi de boîtier (26) ou une sur une carte à circuit imprimé (27).

4. Barrière photoélectrique selon une des revendications précédentes, caractérisée par le fait que l'émetteur de lumière (7) et le récepteur de lumière (8) sont disposés dans la région périphérique du support de barrière photoélectrique (6).

5. Barrière photoélectrique selon la revendication 2 ou 3, caractérisée par le fait que les guides optiques (15) sont connectés au support de barrière photoélectrique (6) par un raccord vissé ou un raccord enfichable.

6. Barrière photoélectrique selon une des revendications précédentes, caractérisée par le fait qu'il est prévu dans le support de barrière photoélectrique (6) chaque fois un trou (23) pour recevoir les guides de lumière (15) ou l'émetteur de lumière (7) et le récepteur de lumière (8).

7. Barrière photoélectrique selon une des revendications précédentes, caractérisée par le fait que l'élément de déviation comporte une surface de réfraction de la lumière (21) qui effectue une réfraction à 90° environ.

8. Barrière photoélectrique selon une des revendications précédentes, caractérisée par le fait qu'un tronçon (12.1, 12.2) des trajets optiques qui s'étendent transversalement à l'intervalle de barrière à l'intérieur du support de barrière photoélectrique (6) est formé par un conduit ou par un trou.

9. Barrière photoélectrique selon une des revendications précédentes, caractérisée par le fait que l'émetteur de lumière (7) et le récepteur de lumière (8) peuvent être montés sur le support de barrière photoélectrique (6) dans une position dans laquelle ils sont alignés avec les tronçons de trajet optique (12.2) associés.

10. Barrière photoélectrique selon la revendication 9, caractérisée par une liaison vissée ou à enfichage entre le support de barrière photoélectrique (6) et l'émetteur de lumière (7) et le récepteur de lumière (8).
